## Europäisches Patentamt
## European Patent Office
## Office européen des brevets

(11) Publication number: **0 241 852**
**A2**

(12) **EUROPEAN PATENT APPLICATION**

(21) Application number: **87105187.6**

(22) Date of filing: **08.04.87**

(51) Int. Cl.⁴: **B 60 C 23/04**

(30) Priority: **08.04.86 IT 5323886 U**

(43) Date of publication of application: **21.10.87**
**Bulletin 87/43**

(84) Designated Contracting States: **DE ES FR GB**

(71) Applicant: **URMET S.p.A. Costruzioni Elettro-Telefoniche, Via Bologna 188/C, I-10154 Torino (IT)**

(72) Inventor: **Mondardini, Massimo, Via Mazzini 40, I-10100 Torino (IT)**

(74) Representative: **Modiano, Guido et al, MODIANO, JOSIF, PISANTY & STAUB Modiano & Associati Via Meravigli, 16, I-20123 Milan (IT)**

(54) Device for detecting the maximum and minimum pressure of motor vehicle tyres for signal relaying aboard the motor vehicle.

(57) The device comprises a metallic container (30) which defines a first and a second chamber (36, 37) sealingly separated by a membrane (32) of elastically resilient material. The first chamber (36) communicates, through a connection (23), with the tyre (10) to be controlled; the second chamber (37) contains first and second differential switch means composed of a pair of movable contact carrier elements (38, 39, 54) subject to the action of the membrane (32) and of respective contrast springs (40, 41). The movable contact carrier elements (38, 39, 54) move in opposite directions to engage the respective fixed contacts (31, 46) when the pressure acting on the membrane (32) drops below, or rises above, preset lower and upper thresholds. Means (48, 56) being furthermore provided for independently varying the preloading of each contrast spring (40, 41) for independently setting said lower and upper thresholds and means (K, 57, H, 49, 30) are provided which set a positive electric polarity and a negative one, or vice versa, between said movable contacts and said fixed contacts.

DEVICE FOR DETECTING THE MAXIMUM AND MINIMUM PRESSURE OF MOTOR VEHICLE TYRES FOR SIGNAL RELAYING ABOARD THE MOTOR VEHICLE

The present invention relates to a device for detecting the maximum and minimum pressure of motor vehicle tyres, suitable to operate in combination with a radio transmitter for signal relaying aboard the motor vehicle.

Systems for indicating the maximum and minimum value of the pressure of tyres are known, based on the transmission, by means of a radio frequency carrier wave, of a signal emitted by a detector consisting of an electropneumatic transducer suitable to indicate attainment of the maximum and minimum threshold value of the pressure by closing corresponding electric contacts.

All these known systems make use of transducers wherein the pressure of the tyre is balanced by the elastic action of a spring which acts on an element provided with movable electric contacts, which, at a correct operating pressure, is kept in an intermediate position with respect to a pair of fixed contacts, respectively for the maximum and minimum value, and which, as the pressure increases, is pushed, in contrast to the action of the spring, to engage the fixed maximum-value contact, while as the pressure decreases is pushed by the spring to engage the fixed minimum-value contact. The electric signal which derives therefrom is of a logical type, in that closing of the maximum and minimum pressure contacts corresponds to the activation of the radio transmitter, which is otherwise inactive. The onboard receiver picks up the emitted signal, discriminating it from noise, by comparing it with a sample value, and activates accordingly the indicating instruments, which can be of various types: acoustic, visual, and even suitable for storing the information.

The known detectors composed of electropneumatic transducers of the type specified must be calibrated according to the pressure value prescribed for the different types of tyres, and this is achieved by varying preloading of the spring which opposes the action of the pressure. Such a calibration method, however, has significant disadvantages, since variation of the preloading tension leads to a simultaneous and corresponding variation of both intervention thresholds of the detector, that is both the maximum and the minimum ones. Accordingly, the adaptation of the detector to a significantly increased maximum threshold value often alters the behaviour of the detector with respect to the minimum threshold and vice versa, so that the simple variation of the preloading tension of the spring becomes insufficient and the spring itself must be replaced with another one with different characteristics.

This entails an additional economic burden, due to the need to stock a remarkable variety of springs, and furthermore entails an obvious discomfort and ineffectiveness in use related to the need for troublesome interventions and to the possibility of mistakes.

Another severe disadvantage of known detectors of the type described resides in the fact that, in any case, the ratio between the maximum and minimum pressure thresholds cannot be varied, since it is univocally determined by the strain-deformation characteristic of the contrast spring.

In some cases this makes the device unusable, for example in the case of special vehicles, such as amphibian vehicles, off-road vehicles, vehicles with paired wheels, wherein the ratio between the maximum and minimum pressure can vary significantly according to the manner of use and from wheel to wheel.

The main aim of the present invention is to eliminate these disadvantages.

In particular, an important object of the present invention is to provide a detector device having an improved effectiveness in use deriving from the possibility of varying, separately and within a wide range, the values of the maximum and minimum thresholds - and therefore their ratio - of the pressure of a tyre and having a greater facility of use deriving from the simplification of the operations required for said independent calibration.

Another object of the present invention is to provide a detector device of simplified construction and great reliability in use.

A further object of the invention is to provide a detector device which is applicable to any kind of tyre, in particular to the large tyres of conventional and special transport vehicles, as well as to car tyres, that is to say to a range of tyres the operating pressures whereof differ by values even greater than one atmosphere.

In order to achieve these important objects, and others which will become apparent from the following detailed description, the present invention relates to a device for detecting the maximum and minimum pressure of tyres, characterized in that it comprises a metal container, a membrane of elastically yielding material which sealingly separates a first and a second chamber in said container, the first of which communicates, by means of a connection, with the tyre to be controlled; first and second differential switch means contained in said second chamber and formed by a pair of movable contact carrier elements, which are subject to the action of the membrane and of respective contrast springs and selectively move in opposite directions to engage respective fixed contacts when the pressure acting on the membrane drops below or rises above preset lower and upper thresholds; means for independently varying the preloading of each contrast spring for independent calibration of said lower and upper thresholds, and means for setting a positive and a negative electric polarity, or vice versa, between said movable contacts and said fixed contacts.

The invention will become apparent from the following detailed description, with reference to the accompanying drawings, where:

Fig. 1 is an elevation view of the wheel of a motor vehicle, provided with the device object of the invention;

Fig. 2 is a detail view of the device associated with the radio transmitter;

Fig. 3 is a very enlarged axial cross section view along line III-III of Fig. 2;

Figs. 4 and 4A are detail views of fig. 3, illustrating the two operative configurations of the detector.

In the drawings , 10 indicates the wheel of a motor vehicle, and 20 a container rigidly coupled to any point of the wheel rim and containing at least one pressure-detecting device 21 and a radio transmitter 22 preferably of the frequency-modulation type.

A tube 23 connects, in a per se known manner, the detector 21 to the valve 24 of the tyre, preferably with interposed a safety connection 25 which is the object of another Industrial Utility Model application by the same Applicant.

The container 20 can also contain two detectors like 21, for example if the device is provided in the wheel of a special vehicle with a tyre which is subject to highly differentiated operating pressures, and in this case each detector can be connected to the tyre by means of a single tube, provided with a quick coupling, which is selectively connected to one or to the other dectector according to the use requirements.

According to the present invention, the detector 21 comprises a hollow cylindrical container 30 of electrically conducting material, advantageously aluminum-based alloys, inside which an annular collar 31 is formed which acts as a support for a membrane 32 of elastically yielding material, advantageously loaded elastomeric material. The membrane 32 is kept in place by an OR type gasket 33 pressed by a threaded cover 34, screwed into a complementary threaded seat of the body 30 and provided with a tang 35 for connection to the tube 23. In this manner, the membrane 32 sealingly separates, inside the container 30, a first chamber 36 made to communicate with the tyre by means of the tube 23, and a second chamber 37 in which first and second differential electric switch means are contained which detect attainment of a maximum threshold and of a minimum threshold of the value of the pressure acting on the

- 6 -

0241852

membrane 32. Said switch means comprise a pair of movable contact carrier elements 38-39 which are subject to the action of the membrane 32 and are opposed by respective springs 40-41. The contact carrier element 38 is formed by a metal annular bush provided with a stem 42 for centering and retention of the spring 40. In the cavity of said bush, the tang 43 of a small piston 44 in polymeric material is inserted, and has a face in contact engagement with the membrane 32. The bush 38 is axially movable against the action of the spring 40 and for a portion limited by a stop shoulder 45, in a metal sleeve 46. At the free end of the sleeve 46, a threaded seat 47 is formed in which a calibration screw 48 engages on which the spring 40 reacts. A conducting plate 49 structurally and electrically connects the sleeve 46 to a terminal 50 for the insertion of an electric conductor H. The terminal 50 is fixed, since it is inserted in a corresponding seat 51 of the container 20. Outside the sleeve 46, at least one threaded portion 52 is provided, on which a bush 53, of electrically insulating material and matchingly threaded, is screwed.

The movable contact carrier element 39 is in turn composed of an annular bush of insulating material, provided with a hub which is slideable within a containment seat delimited by the collar 31, one end of which is in contact with the membrane 32. The hub of the bush is provided with a through cavity which slideably contains the small piston 44. The end of the bush 39, opposite to the one in contact with the membrane, is widened and is provided with a rigidly coupled cup disk 54 with a central hub for retention and centering of the contrast spring 41. The latter reacts on a calibration ring 55, of metallic material, which encircles and contains the insulating bush 53. The ring 55 is provided with an outer thread 56 with the same pitch as the bush 53 and is screwed into a complementarily threaded portion of the container 30 in which a terminal seat 57 is formed for insertion of a second electric conductor K.

The metallic elements 30-41-54 are subject, by means of the conductor K, to an electric polarity; the elements 38-40-46, by means of the conductor H and the plate 49, are subject to the other electric polarity and closing of the circuit (not illustrated) by means of the first or the second assembly of elements produces activation of the radio transmitter 22.

The operation of the device is as follows:

a) if the pressure of the air acting on the membrane 32 is within the preset limits, the thrust on the membrane balances the tension of the spring 40 and these contrasting forces keep the contact carrier bush 38 in an intermediate position of no contact with the disk 54 as illustrated in Fig. 3.

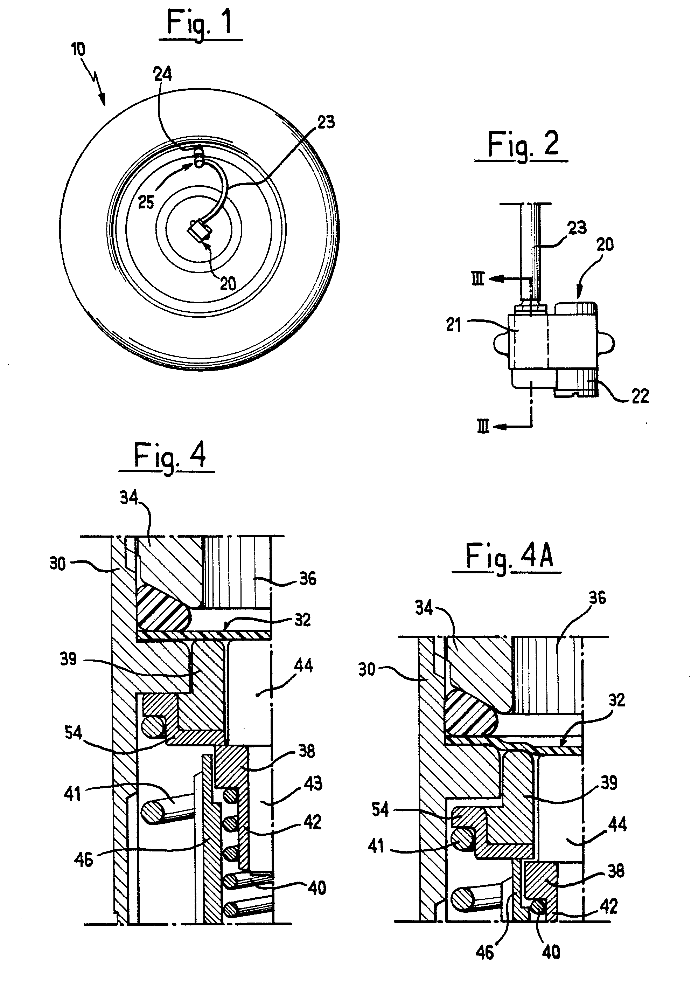

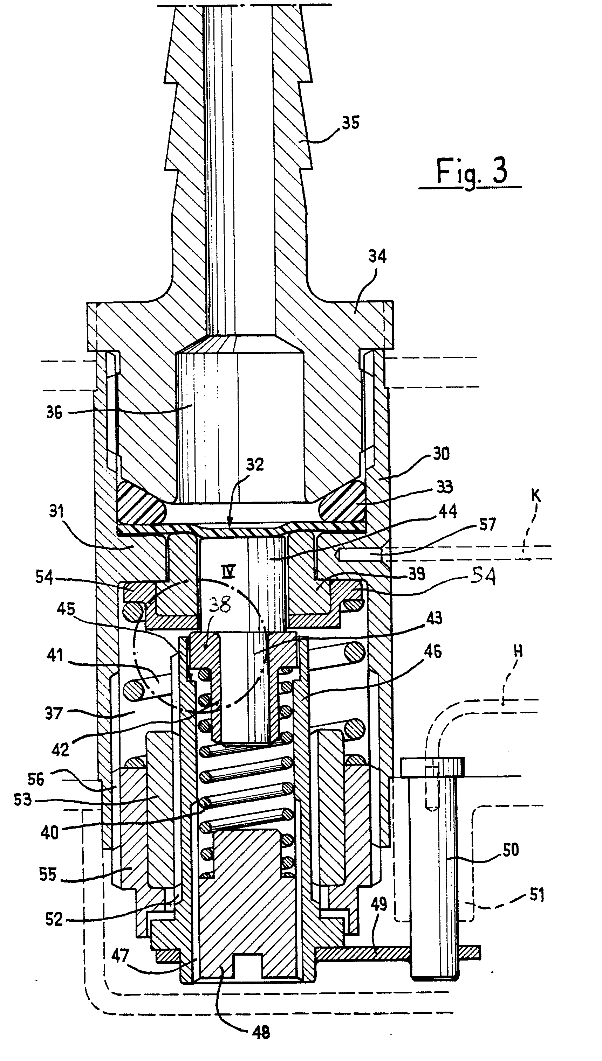

b) when the pressure acting on the membrane drops below the preset lower threshold, the small piston 44, pushed by the spring 40, moves upwards with reference to the drawing, deformating the membrane 32 and allowing the bush 38 to make contact with the disk 54 as illustrated in the detail of Fig. 4. This causes closure of the circuit through the following elements; H, 49, 46, 40, 38, 54, 30, K.

c) when the pressure acting on the membrane rises above the preset upper threshold, the membrane deformates causing displacement of the bush 53 against the action of the spring 41 and this displacement is followed by the contact of the disk 54 with the sleeve 46 as illustrated in the detail of Fig. 4A. This causes closing of the circuit through the following elements: H, 49, 46, 54, 41, 30, K.

In agreement with the stated objects, calibration of the lower and upper threshold values (and therefore of their in any way preset ratio) is achieved independently by acting selectively on the screw 48 and respectively on the ring 55 which is advantageously provided, for this purpose, with an hexagonal portion 57 for the insertion of an operating key.

To set the device, the following procedure is preferably adopted:

1) the ring 56 is screwed on to push the disk stably into contact with the annular abutment 31 and the screw 48 is partially unscrewed. Through the connection of the cover 34, air is fed at the pressure preset for the minimum threshold. The screw 48 is screwed on until closing of the circuit is achieved, indicated, for example, by a lamp.

2) Successively, air is fed at the pressure preset for the maximum threshold, and the ring 55 is unscrewed until closing of the circuit is again achieved.

Once setting has been performed, the ring 55 and the screw 48 can be buried in a suitable sealant which ensures constancy of the nominal setting.

Naturally, the effects of the present model extend to models which achieve an equal utility using the same inventive concept.

CLAIMS

1. Device for detecting the maximum and minimum pressure of motor vehicle tyres, operating in combination with a radio transmitter for signal relaying aboard a motor vehicle, characterized in that it comprises in combination a metallic container (30); a membrane (32) of elastically yielding material which sealingly separates a first and a second chamber (36 and 37) in said container (30) the first (36) of which communicates, by means of a connection (23), with the tyre (10) to be controlled; first and second differential switch means contained in said second chamber (37) and formed by a pair of movable contact carrier elements (38, 39) which are subject to the action of the membrane (32) and of respective contrast springs (40, 41) and move in opposite directions to engage respective fixed contacts (31, 46) when the pressure acting on the membrane (32) drops below or rises above preset lower and upper thresholds; means (48, 56) for independently varying the preloading of each contrast spring (40, 41) for independent calibration of said lower and upper thresholds and means (H, 49, K) for setting a positive and a negative electric polarity, or vice versa, between said movable contacts and said fixed contacts.

2) Detector device according to claim 1, characterized in that the first differential switch means comprise a metallic bush (38), which is slideable in a metallic sleeve (46) subject to an electric polarity, provided with a stem (42) for centering of the contrast spring (40), and in which is inserted the tang (43) of a small piston (44) of insulating material provided with a face in contact with the membrane (32); the bush (38) being pushed by the contrast spring (40) to slide within the sleeve (46), to engage the movable contact carrier element (39) of the second switch means and to close the electric circuit of the transmitter (22) when the pressure acting on the membrane (32) drops below the preset lower threshold.

3. Detector device according to claims 1 and 2, characterized in that the second switch means comprise an annular insulating bush (39) provided with a hub, which is slideable within a seat (31) of the metal sleeve (30) and slideably contains said insulating small piston (44); the bush (39) being provided with a cup disk (54) of conducting material, on which the contrast spring (41) is centered, which disk is subject to an electric polarity and is pushed by the membrane (32) to move against the action of the spring (41) to move the disk (54) into contact with said sleeve (46) subject to the other electric polarity and to close the electric circuit of the transmitter (22) when the pressure acting on the membrane (32) rises above the preset upper threshold.

4. Detector device according to claims 1 to 3, wherein said sleeve (46) is provided with a threaded seat (47) engaging a screw (48) for calibration of the contrast spring (40) of said first switch means.

5. Detector device according to claims 1 to 3, characterized in that it comprises a setting ring (55) for the contrast spring (41) of the second switch means and in that said ring (55) comprises an outer threaded metallic portion (56) and an inner insulating portion (53) also threaded with the same pitch as the outer one; the outer portion (56) being suitable to engage a threaded seat of the container (30) of the device, the inner one being screwed onto a threaded portion of said sleeve (46).

6. Detector device according to claims 1 and 5, characterized in that said sleeve (46) is mechanically and electrically coupled to an electric conductor-bearing terminal (50) through a rigid plate (49); the terminal (50) being rigidly inserted in a seat (51) of the container of the device.

7. Detector device according to any one of the preceding claims, wherein the outer metallic container (30) is provided with a terminal seat (57) for the insertion of a second electric conductor (K).

Fig. 1

Fig. 2

Fig. 4

Fig. 4A

0241852

Fig. 3